# EUROPEAN PATENT APPLICATION

(11) **EP 4 663 540 A1**
(43) Date of publication of application: **17.12.2025**
(21) Application number: 24181959.8
(22) Date of filing: 13.06.2024
(51) Int. Cl.: B64C 9/16, B64D 45/00

(54) **ARRANGEMENT FOR DETECTING FAILURE AND/OR MONITORING INTEGRITY OF A DRIVE LOAD PATH FOR DRIVING A HIGH LIFT SURFACE OF AN AIRCRAFT, HIGH LIFT SYSTEM, AND METHOD**

(71) Applicant: AIRBUS Operations GmbH, 21129 Hamburg (DE)
(72) Inventor: Wojack, Mario, 21129 Hamburg (DE); Thebes, Vasco, 21129 Hamburg (DE)
(74) Representative: Isarpatent

(57) **Abstract**

The present invention relates to an arrangement (36; 36'; 36") configured to detect failure of and/or monitor integrity of a drive load path (P) for driving a high lift surface (17; 19) of an aircraft (1). The arrangement comprises a detection device (71; 71'; 71") arranged and adapted to detect an interruption of the drive load path or at least partial loss of load transmitted along the same. The arrangement is configured to provide a signal indicating failure of the drive load path and/or a signal indicating integrity of the drive load path depending on a condition, value or measure detected by the detection device. Moreover, the invention proposes a high lift system of an aircraft including an arrangement in accordance with the invention. Still further, the invention relates to a method of detecting failure and/or monitoring integrity of a drive load path (P) for driving a high lift surface (17; 19) of an aircraft (1).

## Description

### TECHNICAL FIELD OF THE INVENTION

The invention relates to failure detection and/or health or integrity monitoring in connection with high lift systems of aircraft. An arrangement for failure detection and/or integrity monitoring, a high lift system of an aircraft including such an arrangement, and a method of detecting failure and/or monitoring integrity are proposed.

### TECHNICAL BACKGROUND

Aircraft, for instance commercial passenger or freight airplanes, comprising wings that during flight generate lift by the airflow around the airfoil, are typically equipped with devices which are adapted to increase the lift in certain phases of the flight. As the amount of lift force generated is dependent on airspeed, such high lift devices are mostly retracted during cruise flight, but are deployed when the airspeed is comparatively low, in particular during take-off and landing. Such high lift devices and systems have been in use for a long time, and various types and variants of such devices and systems have been proposed over the years.

A conventional, widespread configuration, for example, includes so-called slats as high-lift devices on the wing leading edge, and so-called flaps as high-lift devices on the wing trailing edge. The trailing-edge flaps and leading-edge slats are mounted in a manner that enables these components to be moved in a controlled way relative to a fixed portion of the wing, for deployment and retraction.

High lift devices such as flaps and slats have considerable influence on the effect of the wing and the behaviour of the aircraft. Therefore, considerable effort is made to ensure that these high lift devices can be driven and controlled in a reliable manner at all times during flight. Also, effort has been directed to detecting when during deployment or retraction of such a high lift device, jamming or skewing of a high lift surface such as a flap occurs, in order to warn the pilot and to prevent further movement of the flap that is affected.

A method and an apparatus for detecting skew and asymmetry of an airplane flap are described in US 6,299,108 B1. In order to detect jam and skew situations, a crank and link are used in US 6,299,108 B1 to convert translational motion of the flap, specifically flap carriage motion, into rotary motion that is then detected by a rotary position sensor.

US 2023 / 0159 183 A1 is concerned with a further jam detection system for a flap of a wing of an aircraft, wherein the jam detection system comprises a linkage that is coupled to the flap and to a support, as well as a sensor which is configured to detect a position of at least a portion of the linkage.

Moreover, DE 10 2019 109 316 A1 describes a geared rotary actuator (GRA) for a high lift system of an aircraft. For detecting cases of jamming, the GRA is provided with an internal torque sensor having two sensing elements, one of which is provided to detect the input torque at an input shaft of the actuator, while the other one is provided to detect the output torque at an output shaft. For the torque sensor, DE 10 2019 109 316 A1 describes using a magnetostrictive detection principle.

Moreover, US 2009 / 0 152 064 A1 and DE 10 2006 020 554 A1 describe an interconnecting strut for arranging between adjacent landing flaps of an aircraft. The strut has two strut elements that can be longitudinally displaced relative to each other within a permissible range. On one of the strut elements, two sensors are arranged, which are capable of identifying if a maximum permissible displacement between the strut elements is exceeded in tractive or compressive direction.

### SUMMARY OF THE INVENTION

In view of this background, a problem to be solved by the present invention therefore is to provide an improved way of monitoring operational behaviour of a high lift system of an aircraft. A correspondingly improved high lift system is to be proposed.

This problem is solved by an arrangement having the features of claim 1 and/or by a high lift system having the features of claim 13 and/or by a method having the features of claim 14.

Accordingly, the invention proposes an arrangement configured to detect failure of and/or monitor integrity of a drive load path for driving a high lift surface of an aircraft. The arrangement proposed by the invention comprises a detection device arranged and adapted to detect an interruption of the drive load path or an at least partial loss of load transmitted along the same. In accordance with the invention, the arrangement is configured to provide a signal indicating failure of the drive load path and/or a signal indicating integrity of the drive load path depending on a condition, value or measure detected by the detection device.

Furthermore, in accordance with the invention, a high lift system of an aircraft is provided, comprising
a high lift surface arranged to be movable with respect to a wing structure in accordance with pre-defined system kinematics;
a drive arrangement adapted to drive the high lift surface for movement thereof in accordance with the system kinematics and capable of supplying a driving load for the high lift surface along a drive load path; and
an arrangement configured to detect failure of and/or monitor integrity of the drive load path according to the invention.

Still further, the invention provides a method of detecting failure and/or monitoring integrity of a drive load path for driving a high lift surface of an aircraft, in particular using an arrangement in accordance with the invention, wherein the method comprises:
monitoring if an interruption of the drive load path or an at least partial loss of load transmitted along the same is present using a detection device; and
providing a signal indicating failure of the drive load path and/or a signal indicating integrity of the drive load path depending on a condition, value or measure detected by the detection device.

It is an idea of the invention to monitor integrity or health of a drive load path that supplies a driving load to a high lift surface, and in order to do so, to detect if the drive load path is interrupted completely or part of the driving load is lost along the drive load path. Monitoring integrity or health of a drive load path is considered herein in particular as monitoring whether the drive load path is free from a relatively sudden or abrupt failure condition. Yet, it will be understood that in some embodiments of the invention, as described herein below, the invention may be used also to monitor more gradual changes in operational behaviour over time.

Accordingly, the invention enables the detection of failure cases like e.g. drive load path disconnect, interruption due to mechanical rupture, or freewheeling within a drive unit that is part of the drive load path. Disconnect or mechanical rupture may lead to a substantially full loss of load transmitted along the drive load path. Drive-unit freewheeling, for instance, may in some cases cause partial loss of load along that load path. Also, the invention may further contribute to detecting also failure situations like jamming, and to detecting skewing of high lift surfaces that may result from the load path failure or jamming. The invention thus contributes to a reliable monitoring of the operational behaviour of a high lift system and may also help to improve maintenance procedures.

Advantageous improvements and developments of the invention are contained in the dependent claims as well as in the description referring to the drawings.

In a development, the detection device is adapted to detect when the high lift surface reaches a pre-defined end position, in particular a pre-defined end position corresponding to a nominal fully retracted state of the high lift surface. Such a kinematic end position, e.g. high lift surface kinematic retract position, can be evaluated in a simple and reliable manner in order to detect failure of the load path. The detection device can be used, for instance, to check if after performing an operation of retracting the high lift surface, the pre-defined nominal retracted position of the high lift surface is reached or not. The result of this evaluation is used in accordance with this development to confirm the integrity of the drive load path associated with the high lift surface if the pre-defined nominal end position, e.g. fully retracted position, is reached, and/or to provide a signal indicating that a failure in that load path occurs if the pre-defined nominal end position is not reached. In particular, detection and evaluation in accordance with this development based on the fully retracted state may be performed when the aircraft is on the ground.

According to an improvement, the detection device comprises a sensor mounted on a support structure for the high lift surface or near the support structure and fixed relative thereto, the high lift surface being movably arranged with respect to the support structure. In this development, the detection device further comprises a sensing target that is movably arranged with respect to the support structure and assumes a pre-defined sensing target end position if the high lift surface has reached the pre-defined end position, in particular the nominal fully retracted state, and the sensor is adapted to detect when the sensing target reaches and/or leaves the sensing target end position. In this way, the detection is enabled in a simple and expedient manner. Mounting the sensor fixed relative to the support structure may contribute to facilitating cabling, in particular for coupling the sensor to a data processing device or the like.

In particular, the sensor may be configured as a proximity sensor. This may contribute to high reliability and durability of the detection device.

In accordance with a further improvement, the sensing target is mounted on a high lift surface carriage that can be caused to move along a track defined on the support structure. Based on the kinematic connection of the high lift surface carriage to the high lift surface, a difference between an actual end position as well as a pre-defined, nominal end position of the carriage can be used to perform the detection of a failure if present. Mounting the sensing target on the carriage may help to accommodate the corresponding sensor in a well-protected manner and in a position on the wing that is not exceedingly exposed, which further contributes to the durability of the detection device.

In a further development, the detection device is adapted to detect a measure for a difference of an actual position of the high lift surface from a pre-defined end position thereof, in particular a pre-defined end position corresponding to a nominal fully retracted state of the high lift surface. Performing the detection in this manner increases the flexibility of the arrangement and method. In particular, the evaluation of the detected difference may be adapted to current flight phase, aircraft configuration and/or air speed, for instance. Moreover, temporary events such as a gust of air, a wavy taxiway surface, etc. can be taken into account in a simpler manner, as compared to an installation of a sensor in a fixed position which produces a result representing values of NEAR or FAR only.

According to an improvement, the detection device comprises a sensor mounted on a support structure for the high lift surface or near the support structure and fixed relative thereto, the high lift surface being movably arranged with respect to the support structure, the detection device further comprises a sensing target that is movably arranged with respect to the support structure and assumes a pre-defined sensing target end position if the high lift surface has reached the pre-defined end position, in particular the nominal fully retracted state, and the sensor is adapted to detect a distance of the sensing target from the sensing target end position. Also in this improvement, mounting the sensor on the support structure or fixed with respect to the support structure may facilitate cabling and improve durability.

In accordance with a further improvement, the sensing target is mounted on a high lift surface carriage that can be caused to move along a track defined on the support structure. This contributes to a precise detection of the absolute, numerical difference of the actual position of the high lift surface from its pre-defined end position based on the kinematic connection of the carriage and the high lift surface. Moreover, protection and durability of the sensor can in this way be further improved.

In a still further development, the detection device is adapted to detect a value that is capable of being used as a measure for an actual position of the high lift surface with respect to a pre-defined reference position thereof along a substantially entire stroke through which the high lift surface is nominally movable in accordance with pre-defined system kinematics. This further improves the flexibility of the arrangement. In particular, it becomes possible in this manner to monitor the entire stroke of the high lift surface during movement thereof for deployment or retraction. In this way, other positions different from pre-defined end positions of the high lift surface may be considered for evaluation, e.g. so-called intermediate "gated positions" in which the high lift surface may be maintained over a period of time or other intermediate positions. An actual difference relative to such a nominal intermediate or "gated" position can be used to perform integrity monitoring of the drive load path. The difference with respect to a nominal position may even be monitored substantially continuously throughout the stroke. This development may contribute to detecting failure cases like disconnect or jamming, that may each lead to skewing, in further improved manner. Moreover, a substantially continuous absolute measurement of the high lift surface position relative to the reference can be compared with a nominal curve that relates the high lift surface position to the stroke carried out by the driving actuator, for instance. Thus, for example, a difference between actual and nominal position can be calculated continuously along the stroke. Also, in an improvement, a threshold against which the difference is compared, in order to identify failure situations, can be varied along the stroke for improving the reliability of the failure detection and at the same time avoid false alarm. Also, detecting an actual position of the high lift surface relative to a reference along substantially the complete stroke facilitates detection of drive load path failures during the flight, where the high lift surface might be nominally displaced from its fully retracted end position, as well as a comparison between results detected on the left and right wings in order to identify asymmetry if present.

According to an improvement, the detection device comprises a position sensor mounted on a support structure for the high lift surface or near the support structure and fixed relative thereto, the high lift surface being movably arranged with respect to the support structure, the detection device further comprises a sensing target that is movably arranged with respect to the support structure and is movable in a manner kinematically linked to the movement of the high lift surface along the substantially entire stroke thereof, and the position sensor is configured to detect a position of the sensing target with respect to the reference position for the substantially entire stroke. In this improvement, too, mounting the sensor on the support structure or fixed relative thereto may contribute to simpler cabling and accommodation and improve durability.

In a still further improvement, the sensing target is mounted on a high lift surface carriage that can be driven to move along a track defined on the support structure. The advantages are in particular as noted above.

In a development, the position sensor may be a linear position sensor, for example a linear position encoder. Such a linear position sensor may be particularly advantageous in combination with a movement of the sensing target along a straight path, for instance if the track along which the carriage is movable is substantially straight. The combination of a straight track with a straight or linear position sensor enables an absolute displacement detection in a particularly convenient, simple and accurate manner. Also, a linear position sensor may provide a precise detection along substantially an entire effective length thereof.

According to a still further development, the detection device is configured to detect a value suitable for being used as a measure for a torque transmitted at a mounting interface between an actuator, in particular a geared rotary actuator, that is provided along the drive load path and a fixed wing structure to which the actuator is attached. This provides an alternative way of monitoring the integrity of the drive load path. For instance, such monitoring in line with this development may be performed continuously for the entire stroke travelled by the high lift surface for deployment or retraction thereof. In addition, this development relies on a load actually supported by a component within the load path as part of the actuator.

In an improvement, the detection device comprises at least one load sensor configured and arranged to enable measurement of the torque supported by a ring gear of the actuator, the ring gear being fixedly coupled to the fixed wing structure, for example via a housing of the actuator to which the ring gear is connected. Such load sensor(s) for detecting torque can be installed, for example, in a well-protected manner, which reduces effects of external influence, dirt, etc. and may further improve the durability and reliability of the arrangement. In accordance with a further improvement, two or more load sensors each configured and arranged to enable measurement of the torque supported by the ring gear may be provided, which in particular may provide redundancy and further help to improve reliability.

In a development of the method, monitoring if an interruption of the drive load path or an at least partial loss of load transmitted along the same is present is performed at least at a first station on a left wing of the aircraft and a second station on the right wing of the aircraft corresponding to the first station. In particular, the first and second stations are symmetrically arranged with respect to a plane of symmetry of the aircraft. Further, this development of the method comprises comparing a condition, measure or value detected by the detection device for the first and second stations. In this way, if, for example, a difference between the result of detection on the left and right wings is present and/or exceeds a pre-defined threshold, it may be deduced that asymmetry occurs, which in turn may indicate failure of the high lift surface drive load path at the first or second station. Such a symmetry check may also be used in combination with monitoring deviations from the nominal condition at both first and second stations and may contribute to further improve the identification of the presence or absence of a failure. For instance, this development may also help to avoid false alarm that might be caused by gusts of air or by bumps on the runway or taxiway.

In some developments, two or more detection devices may be provided to detect the interruption of one drive load path or at least partial loss of load transmitted along the same. This may contribute to further improved reliability.

According to a further development of the method, the condition, measure or value detected by the detection device, or by the detection devices if two or more detection devices are provided, may be stored for subsequent evaluation thereof. In this manner, changes in the detected condition, measure or value over time, for example over the operational life of the aircraft, may be evaluated. Furthermore, maintenance procedures may be scheduled to be performed on the basis of such an evaluation. This can contribute to further improved, efficient as well as time- and cost-saving maintenance work.

The high lift surface may, in particular, in developments of the invention be configured as a trailing-edge flap or as a leading-edge slat.

In some developments, the sensor(s), for example the position sensor, the proximity sensor or the torque sensor(s), may be connected to a data processing device using a bus. This may further contribute to simpler installation and cabling. In other developments, the sensor(s) may be connected to the data processing device via an analogue signal interface.

The developments, improvements and implementations of the invention described above can be applied in analogous manner to each of the arrangement, the high lift system and the method of the invention.

### BRIEF SUMMARY OF THE DRAWINGS

The present invention is explained in more detail below with reference to the embodiments shown in the schematic figures, wherein:
- Fig. 1: shows a plan view of an exemplary aircraft which comprises a high lift system including an arrangement for detecting failure of and/or monitoring integrity of a drive load path for driving a high lift surface in accordance with embodiments of the invention and/or in which a method in accordance with embodiments of the invention is used for detecting failure and/or monitoring integrity of such a drive load path;
- Fig. 2: illustrates an arrangement and method in accordance with a first and second embodiment of the invention, in a schematic side view of a track station for a trailing edge flap;
- Fig. 3: illustrates an arrangement and method in accordance with a third embodiment of the invention, in a schematic side view of a track station for a trailing edge flap;
- Fig. 4: illustrates an arrangement and method in accordance with a fourth embodiment of the invention, in a schematic side view of a track station for a trailing edge flap; and
- Fig. 5: illustrates a configuration of a detection device at a geared rotary actuator, in accordance with the fourth embodiment.

In the figures of the drawing, elements, features and components which are identical, functionally identical and of identical action are denoted in each case by the same reference designations unless stated otherwise.

### DESCRIPTION OF EXEMPLARY EMBODIMENTS

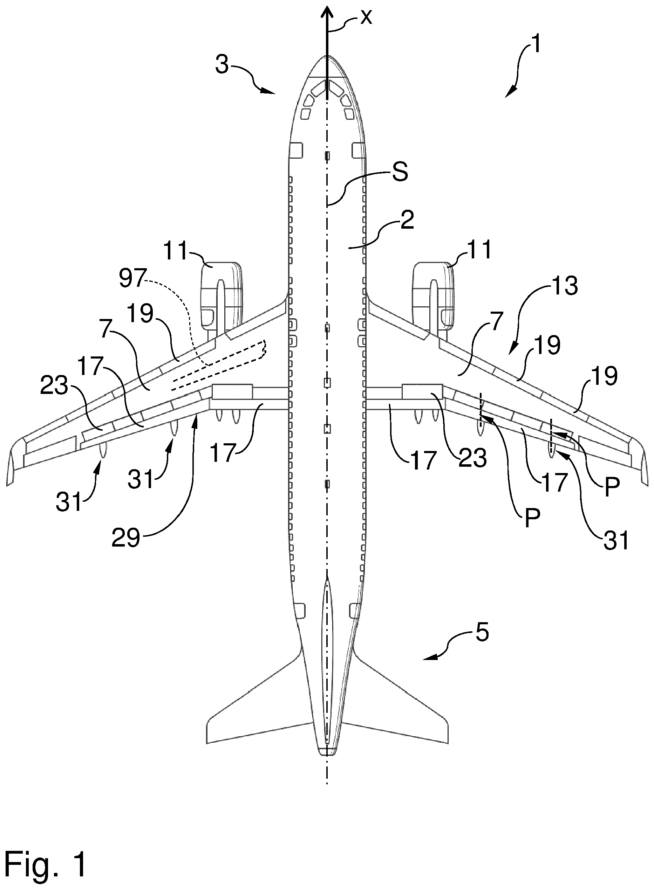

Fig. 1 displays an exemplary aircraft 1, e.g. a commercial passenger aircraft, having a fuselage 2, a nose 3, an empennage 5, wings 7 connected to the fuselage 2, and engines 11 attached to the wings 7. The configuration and shape of the aircraft 1 is substantially symmetric with respect to a vertical plane of symmetry S that contains a longitudinal axis x of the aircraft 1. An arrow indicated by reference numeral x also indicates the flight direction.

The wings 7 are each provided with a plurality of devices for selectively modifying the airflow around the airfoil of the wing 7. More specifically, the aircraft 1 is provided with a high lift system 13 comprising a number of high lift surfaces 17, 19 on each wing 7. These high lift surfaces 17, 19 can be extended and retracted fully or partially and are used in specific flight phases to increase the aerodynamic lift of the wing 7, in particular during take-off and landing.

The high lift system 13 of the aircraft 1 of Fig. 1 includes two trailing-edge flaps 17 at the trailing edge 29 of each wing 7, and five leading-edge slats 19 at the leading edge of each wing 7, only a few of which are designated using a reference numeral in Fig. 1 for greater clarity. The number and configuration of flaps 17 and slats 19 shown in Fig. 1 is, however, exemplary, and greater or smaller numbers of flaps 17 and/or slats 19, and/or flaps 17 and slats 19 of various types, sizes and shapes, are conceivable.

In additions to flaps 17 and slats 19, each wing 7 is provided with spoiler surfaces 23, configured to selectively disturb the airflow, diminish lift and increase drag. Such spoiler surfaces 23 are deployed and used in particular to assist safe braking after landing.

The high lift surfaces 17, 19 are moved relative to a fixed wing structure 97 for deployment or retraction, or for bringing them into pre-defined so-called "gated" intermediate positions, by a dedicated drive arrangement that implements pre-defined system kinematics. The drive arrangement includes an actuator, in particular a geared rotary actuator 61, and a drive mechanism at each of a plurality of track stations 31. In Fig. 1, as an example, two track stations 31 are associated with each one of the trailing-edge flaps 17.

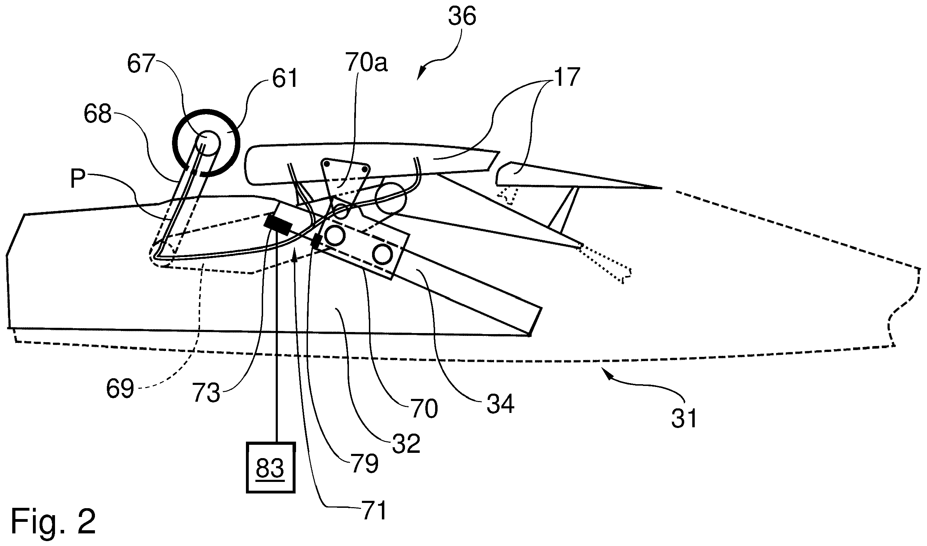

Some components of a track station 31 are shown e.g. in Fig. 2 for one of the flaps 17 in a schematic side view. At the track station 31, the wing 7 is provided with a support structure 32 for the flap 17. A track 34 is defined on the support structure 32. The track 34 follows a straight path.

The support structure 32 is fixedly connected to the fixed wing structure 97, not shown in detail in Fig. 2. Relative to the support structure 32, the flap 17 can be moved. A geared rotary actuator 61 is fixedly attached to the fixed wing structure 97 and includes an actuator output shaft 67, which supplies a driving torque for the flap 17 at the track station 31. A rotational axis of the actuator output shaft 67 is substantially perpendicular to the plane of the drawing in Fig. 2.

One end of a pivotable crank 68 is attached to the actuator output shaft 67. At another end, the crank 68 is pivotably connected to an intermediate member 69, which is part of the drive mechanism. Via a main support 70a, the flap 17 is supported on a high lift surface carriage 70 that is guided by the track 34 for movement along the latter, following the straight path. If the geared rotary actuator 61 rotates the crank 68 via the output shaft 67, the intermediate member 69 is pushed backwards, in Fig. 2 to the right, and the carriage 7 travels along the track 34 towards the right as well. In accordance with the system kinematics defined by this mechanical arrangement, the flap 17 is deployed thereby. The movement requires a driving load acting against the air loads experienced by the flap 17. This driving load is supplied by the actuator 61 along a drive load path P, schematically indicated in Fig. 1 by a dashed line, and in Fig. 2 by a double line.

It is important that high lift devices such as the flaps 17 and slats 19 can be controlled and driven in a reliable manner at all times during flight, including take-off, cruise and landing.

In the following, embodiments of arrangements and methods for detecting failure of and/or monitoring integrity of the drive load path P for driving one of the high lift surfaces 17 or 19 of the aircraft 1 are described. Two drive load paths P may be associated with each high lift surface 17, 19. These arrangements and methods provide ways of informing the pilot about the health status of the load paths P and of informing the pilot in case a failure occurs, and to arrest the affected flap 17 or slat 19, in order to prevent additional damage and fix these high lift surfaces for a safe landing. Also, the information about the failure that is provided may contribute to rapidly arrange for spare parts to be provided and repairs to be carried out once the aircraft 1 has landed. The health status of the load paths P is thus considered in particular as including at least an indication of the absence and/or presence of a rather sudden failure condition.

The high lift surface 17 and its support and drive arrangement are subject to gravity and friction. In case of a non-intact high lift surface drive load path P at one of the track stations 31, in particular a nominal retract position of the high lift surface, e.g. of the flap 17, may not be reached at the affected track station 31. Instead, the high lift surface 17 may still be slightly extended at that track station 31. The same applies for other high lift surfaces, e.g. the slats 19, in substantially analogous manner.

An arrangement 36 and a method in accordance with a first embodiment for detecting failure of and/or monitoring integrity of the drive load path P are illustrated in Fig. 2. The arrangement 36 is part of the high lift system 13 and comprises a detection device 71 arranged and adapted to detect an interruption of the drive load path P or an at least partial loss of load transmitted along the path P.

The detection device 71 comprises at least one sensor 73, schematically illustrated in Fig. 2, and a sensing target 79. The sensor 73 is configured as a proximity sensor 73 capable of sensing proximity of the sensor target 79, and is adapted to check if the high lift surface 17 has reached its pre-defined nominal fully retracted position, in the manner of a "binary" position check. In particular, such a detection can be performed after an operation of full retraction of the flap 17 has been initiated and performed.

While the sensor 73 is fixedly arranged on the support structure 32 in the vicinity of one end of the track 34 or is fixedly arranged relative to the support structure 32 and close to it, the sensing target 79 is arranged on the high lift surface carriage 70 that can be driven to move along the track 34, in particular on a side of the carriage 70 oriented towards the sensor 73. The sensing target 79 is therefore movably arranged with respect to the sensor 73 and support structure 32. When the flap 17 has reached its pre-defined end position, in Fig. 2 defined as a nominal fully retracted state, the carriage 70 is located in a pre-defined end position, as its movement is linked to that of the flap 17 by the system kinematics, and hence, the sensing target 79 assumes a corresponding pre-defined sensing target end position as well.

Using the proximity sensor 73, it can be detected when the sensing target 79 reaches and/or leaves the sensing target end position, and thereby to detect when the flap 17 reaches or leaves its nominal fully retracted state.

In the first embodiment of the invention, the sensor 73 accordingly generates a boolean result, corresponding for example to NEAR if the pre-defined end position is reached or to FAR if that position is not reached. NEAR or FAR are terms that, as such, are common in the field of proximity sensors for referring to the result provided by such a sensor, depending on whether a target is closer to the sensor than a threshold distance or not. Yet, it will be understood that values of NEAR or FAR may be considered analogous to TRUE or FALSE, indicating whether the target is located within a pre-defined range from the sensor or not.

The arrangement 36, comprising at least one such proximity sensor 73, is reliable and durable and can be implemented in a relatively simple manner. In order to implement the arrangement 36 of the first embodiment, the sensor 73 is mounted in a precisely chosen location on the support structure 32, or fixedly arranged relative to and close to the support structure 32, to correctly detect when the end position of the carriage 70 is reached.

The arrangement 36 further includes, in particular, a data processing device 83, connected to the sensor 73 and shown very schematically in Fig. 2, and is configured to provide a signal indicating failure of the drive load path P and/or a signal indicating integrity of the drive load path P depending on a condition detected by the detection device 71. For example, if a full retraction operation of the flap 17 has been completed and the detection device 71 detects that the sensing target 79 has reached the pre-defined sensing target end position, the arrangement 36 may provide, e.g. via the data processing device 83, a message or indication for the pilot indicating that the load path P at this track station 31 functions as intended and is intact. Conversely, if the sensor 73 does not detect that the sensing target 79 has reached the pre-defined sensing target end position after completion of the flap retraction procedure, a corresponding message or indication for the pilot may be provided which indicates a load path failure at that station 31. Further, based on the signal indicating failure of the load path P, the flap 17 may be arrested in its current position to prevent further movement thereof. In this manner, the aircraft 1 can still proceed to a safe landing and repairs can be made before any further flight.

Accordingly, the first embodiment provides for an evaluation of a kinematic retract position to detect load path failure cases such as, for instance, drive load path disconnect and/or freewheeling within the drive unit 61. In the first embodiment, a displacement of the carriage 70 relative to its nominal end position, which corresponds to the nominal fully retracted position of the high lift surface 17, can be detected using the sensor 73 if that displacement exceeds a pre-defined tolerance. The result of this detection can be evaluated using the data processing device 83, schematically shown in Fig. 2, which may be a host computer within the aircraft 1.

A second embodiment of the invention is illustrated by Fig. 2 as well. The second embodiment differs from the first embodiment in that the configuration of the detection device 71 and the evaluation of the data generated by the detection device 71 are modified. In the second embodiment, at least one sensor 73 is provided which is configured to measure the absolute retract position, in other words detect a value representing a distance of the sensor target 79 with respect to a sensing target end position as a reference, e.g. with respect to the fully retracted end position. The detection device 71 of the second embodiment is thereby adapted to detect a measure for a difference of an actual position of the flap 17 from the pre-defined, nominal fully retracted state of the high lift surface 17, as an absolute value, that preferably is substantially continuously provided for a terminal portion of the stroke.

The value obtained in this manner is compared to a pre-defined nominal value using the data processing device 83, e.g. a computer system within the aircraft 1. If as a result of the comparison, a difference between the nominal value and the actual value detected exceeds a pre-defined displacement threshold, a signal indicating that a load path failure occurs can be generated. As in the first embodiment, the signal provided by the sensor 73 can be used in the second embodiment to provide information to the pilot about the detection of a load path failure and/or to arrest the affected flap 17.

The arrangement 36 configured in accordance with the second embodiment provides increased flexibility. In particular, the detected distance of the sensor target 79 from the sensor 73 may be evaluated in a different manner depending on flight phase, for instance. A constant threshold may be defined for triggering a signal that indicates failure, but a threshold varying with flight phase and/or aircraft configuration and/or airspeed may be conceivable for this purpose and may be useful, in particular to further improve the reliability of the detection and/or to avoid false alarm.

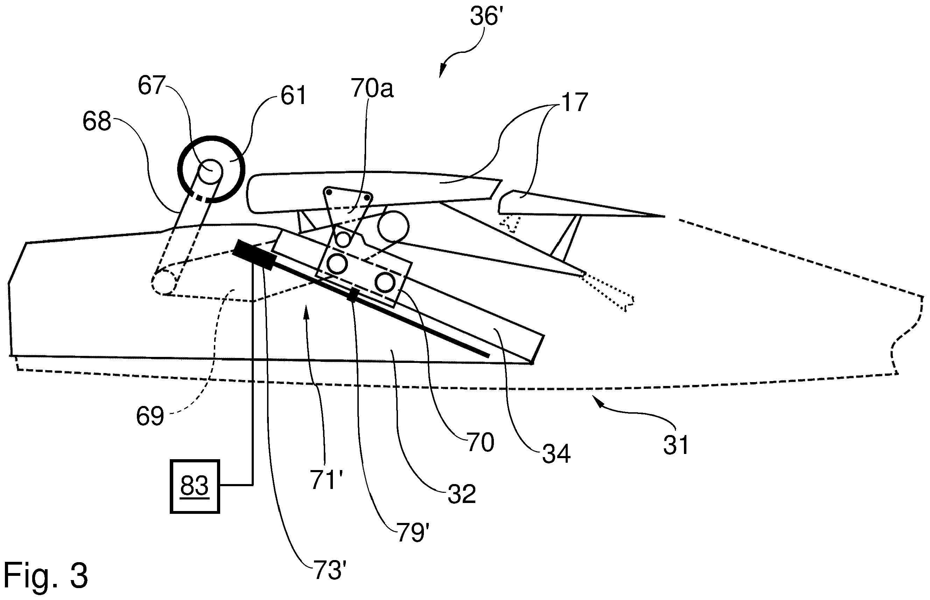

An arrangement 36' for detecting failure of and/or monitoring integrity of a drive load path P for driving the flap 17 in accordance with a third embodiment and a corresponding method are illustrated in Fig. 3. The arrangement 36' differs from the first and second embodiments in a modified configuration of the sensor and sensing target. The arrangement 36' of the third embodiment comprises at least one linear position sensor 73', for instance a linear encoder, mounted on the support structure 32 or near to the support structure 32 and fixed relative thereto. A measurement target or sensing target 79' adapted to cooperate with the position sensor 73' is mounted on the high lift surface carriage 70. By being attached to the carriage 70, the sensing target 79' can be moved in a manner kinematically linked to the movement of the flap 17 along a substantially entire stroke covered by the flap 17 during deployment and retraction. The sensing target 79' thus travels with the carriage 70 as the carriage 70 moves through its complete stroke along the track 34. The position sensor 73' is configured to detect an absolute position of the sensing target 79', in a substantially continuous manner, with respect to a pre-defined reference position for the substantially entire stroke of the carriage 70 and thus of the flap 17. The reference position may, for instance, correspond to a pre-defined end position of the flap 17 and the carriage 70, e.g. to the nominal fully retracted position thereof. In a variant, a different reference position may be chosen instead, if useful, for example an end position corresponding to a nominal fully deployed position, or a pre-defined intermediate position. Using the fully retracted position as a reference, however, may be useful in order to provide a well-defined and well repeatable point of origin.

The detected value provided by the detection device 71' accordingly is a measure for an actual position of the flap 17 with respect to that reference position along the substantially entire stroke through which the flap 17 is nominally movable in accordance with the pre-defined system kinematics.

In accordance with the third embodiment of the invention, the at least one sensor 73' is used to continuously monitor the flap position for the complete stroke of the system kinematics. The measured stroke value can be interpreted by the data processing device 83, e.g. the host computer, to identify high lift system failure cases.

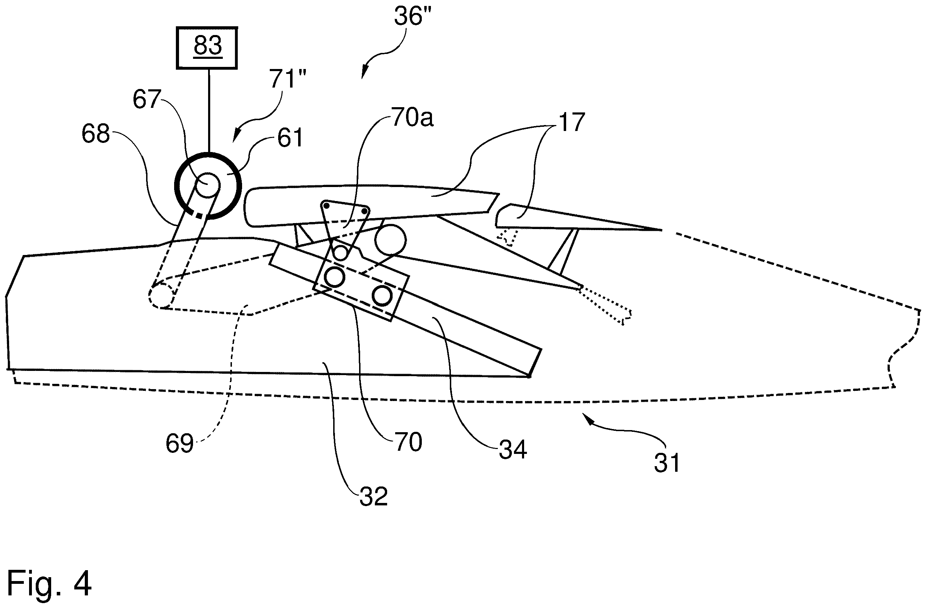

As noted above, the track 34 in Fig. 4 is substantially straight. Hence, advantageously, a linear position sensor 73' that detects a distance value along a straight path can be used. Such a position sensor can be implemented in a comparatively simple, cost-effective manner and provides a precise measurement. A linear encoder may be used, for example.

In a method in accordance with the third embodiment, the measured stroke value can be interpreted or evaluated by the host computer according to one or more of the following steps:
- A comparison of the measured stroke value with a nominal value to identify a discrepancy, for example continuously during the movement of the high lift surface 17, 19 and/or for one or more pre-defined end or intermediate ("gated") positions of the high lift surface; the identified discrepancy is used to detect failures cases such as drive load path disconnection, drive unit failure, and also jam or skew;
- a comparison of detected left wing and right wing high lift surface track stroke, for corresponding track stations 31, in order to identify any asymmetry, if present, between left and right wing 7; the presence or absence of such asymmetry can be used to improve the evaluation of the values or measures detected at individual stations;
- a monitoring of degradation of the detected data over the operational life of the aircraft 1, for example for predicted maintenance purposes, in other word to schedule maintenance as appropriate, based on the detected data; such monitoring of degradation may, for example, include monitoring a difference of the detected data from pre-defined nominal values over time and/or monitoring a difference between values detected for the left and right wing over time, and may thereby provide a way also of health monitoring in the sense of evaluating gradual, rather long-term changes.

The third embodiment thus in particular provides for an evaluation of one or more high lift surface kinematic positions to detect failures cases such as drive load path disconnection or freewheeling within the drive unit or geared rotary actuator 61, but can also contribute to detect failure situations like jam or skew.

In a manner analogous to the first and second embodiment, the sensor data is monitored by a host computer that runs monitoring software configured to provide an indication for the pilot and to arrest at least the affected high lift surface if a failure is detected.

As noted above, in the high lift system 13 of the aircraft 1, the high lift surfaces 17, 19 are driven by at least one geared rotary actuator 61 (or GRA) for each high lift surface 17, 19, and in particular by one GRA 61 at each of the track stations 31. In the embodiments described herein, the geared rotary actuator 61 comprises an epicyclic gear set. Figs. 2-4 show the GRA 61 schematically.

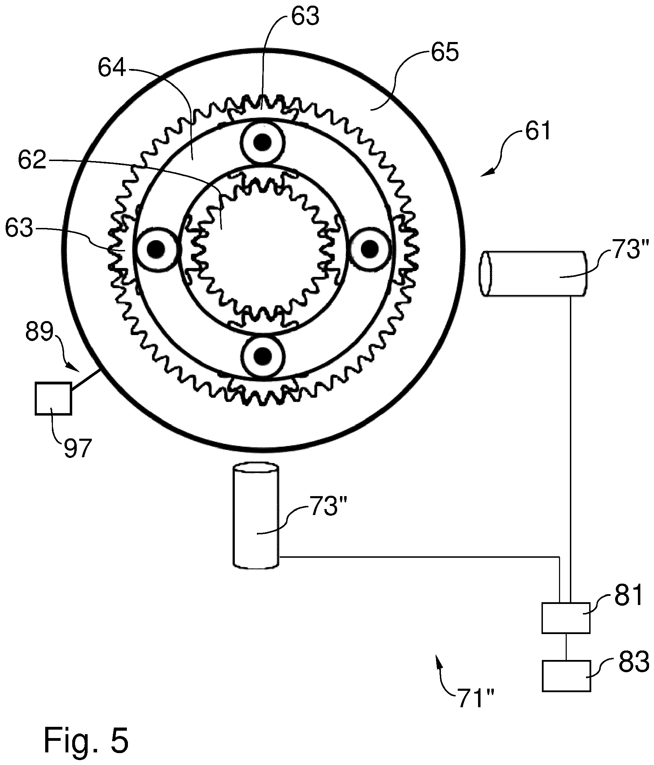

In Figs. 4 and 5, an arrangement 36" and a method according to a fourth exemplary embodiment is illustrated. The flap 17 is moved by a drive arrangement as described above for the first to third embodiments. Fig. 5 displays an epicyclic gear set that is part of the geared rotary actuator 61 in a schematical cross-sectional view. The gear of the GRA 61 includes a sun gear 62, planet gears 63 engaged with the sun gear 62, a planet carrier 64 on which the planet gears 63 are each rotatably supported, and an outer ring gear 65 engaged with each of the planet gears 63. Further, in particular, an input shaft is connected to or formed integrally with the sun gear 62, and the output shaft 67 is connected to or formed integrally with the planet carrier 64.

The ring gear 65 is fixed with respect to the fixed wing structure 97 and is fixedly connected thereto at a mounting interface 89, which is only schematically indicated in Fig. 5. For instance, the ring gear 65 may be fixedly connected to a housing of the actuator 61 or may instead be formed with a housing of the actuator 61 in integral manner, the housing being attached in a fixed manner to the fixed wing structure 97.

The arrangement 36", configured to detect failure of and/or monitor integrity of the drive load path P for driving the flap 17, of the fourth embodiment includes a detection device 71" comprising load sensors 73". The load sensors 73" are configured and arranged to measure the loads applied to the fixed ring gear 65 and transmitted to the fixed wing structure 97 at the mounting interface 89, in the form of torque about a central axis of the ring gear 65, which is perpendicular to the plane of the drawing in Fig. 5. The loads that are measured are then used to monitor the integrity of the drive load path P. By providing the arrangement 36" with two or more load sensors 73" each adapted to measure the load applied to the ring gear 65 and transmitted to the structure 97, the arrangement 36" can be provided with redundancy. The load sensors 73" may, for example, be configured as magnetostrictive sensor(s) or as strain gauge(s).

The geared rotary actuator 61 drives the high lift surface, e.g. the flap 17, by pivoting the crank 68. In order to do so, the actuator 61 supplies a driving torque at the actuator output shaft 67, see Figs. 2-4, which indicate the position of the output shaft 67.

Torque which is applied on the actuator output shaft 67 resulting from external loads, i.e. air loads acting on the high lift surface such as the flap 17, are supported by the ring gear 65 and are thus transmitted e.g. by mounting bolts fixing the ring gear 65 to the fixed wing structure 97.

In case of an intact high lift surface load path P, a high load transfer takes place in the ring gear 65. However, in case of a load path P which is not intact, a significantly lower load is measured by the sensors 73", which is mainly caused by internal friction within the geared rotary actuator 61. The load difference, detected as a torque difference by the sensors 73", between the load measured at the interface 89 for an intact load path P and for an impaired or interrupted load path P can be used to detect a high lift surface load path failure.

In the fourth embodiment, the loads applied to the fixed ring gear 65 are accordingly measured and used to monitor the integrity of the load path P. Load data measured by the load sensors 73", see Fig. 5, may be collected by a data concentrating device 81, which in turn transmits data to a data processing device 83, e.g. a host computer, for evaluation.

While specific exemplary embodiments are described herein above especially with reference to a load path for driving a high lift surface embodied as a trailing edge flap 17, any one of the above-described embodiments is applicable in analogous manner to a load path P for driving a high lift surface embodied as a leading edge slat 19, for example.

In Figs. 2-4, the trailing-edge flap 17 is illustrated in exemplary manner as being configured as a double-slotted flap. Yet, in variants of the embodiments of Figs. 2-4, instead of comprising two separate airfoil-type parts with a slot formed therebetween as shown in these Figures, the trailing-edge flap 17 may be formed with a single airfoil-type part and accordingly may be embodied as a single-slot flap 17. In still further variants, the flap 17 may for instance be configured to form more than two slots when deployed, e.g. in the manner of a triple-slotted flap.

Furthermore, in any of the arrangements 36, 36', 36" and the methods of the first to fourth embodiments, it is conceivable to increase the number of sensors 73, 73', 73" and or of sensing targets 79, 79' for redundancy.

In any of the first to fourth embodiments, the condition, value or measure detected by the detection devices 71, 71', 71" at corresponding track stations 31 on the left and right wing, respectively, can be compared by the data processing device or host computer, e.g. by forming a difference, and can be used to identify asymmetry between left and right wing, which can be used in turn to indicate the possible presence of a load path failure. Also, any of the first to fourth embodiments may include storing the data obtained using the detection devices 71, 71', 71" over the operational life of the aircraft or over at least part thereof, in order to improve the scheduling of maintenance procedures.

Moreover, for additionally improving the detection of load path failures and/or monitoring load path integrity, it is conceivable to combine two or more of the embodiments described herein above. For example, a position evaluation in accordance with the first, second or third embodiment may be combined with a torque evaluation as described for the fourth embodiment.

Even though the invention has been completely described above with reference to embodiments of the invention, the invention is not limited to these embodiments but may be modified in many ways.

### LIST OF REFERENCE SIGNS

- 1: aircraft
- 2: fuselage
- 3: nose
- 5: empennage
- 7: wing
- 11: engine
- 13: high lift system
- 17: trailing-edge flap
- 19: slat
- 23: spoiler surface
- 29: trailing edge
- 31: track station
- 32: support structure
- 34: track
- 36, 36', 36": arrangement
- 61: geared rotary actuator
- 62: sun gear
- 63: planet gear
- 64: planet carrier
- 65: ring gear
- 67: actuator output shaft
- 68: crank
- 69: intermediate member
- 70: carriage
- 70a: main support
- 71, 71', 71": detection device
- 73, 73', 73": sensor
- 79, 79': sensing target
- 81: data concentrating device
- 83: data processing device
- 89: mounting interface
- 97: fixed wing structure
- P: drive load path
- S: plane of symmetry
- x: longitudinal axis

## Claims

1. Arrangement (36; 36'; 36") configured to detect failure of and/or monitor integrity of a drive load path (P) for driving a high lift surface (17; 19) of an aircraft (1), comprising a detection device (71; 71'; 71") arranged and adapted to detect an interruption of the drive load path (P) or at least partial loss of load transmitted along the same, the arrangement (36; 36'; 36") being configured to provide a signal indicating failure of the drive load path (P) and/or a signal indicating integrity of the drive load path (P) depending on a condition, value or measure detected by the detection device (71; 71'; 71").

2. Arrangement according to claim 1,
**characterized in that** the detection device (71; 71') is adapted to detect when the high lift surface (17; 19) reaches a pre-defined end position, in particular a pre-defined end position corresponding to a nominal fully retracted state of the high lift surface (17; 19).

3. Arrangement according to claim 2,
**characterized in that** the detection device (71) comprises a sensor (73) mounted on a support structure (32) for the high lift surface (17; 19) or near the support structure (32) and fixed relative thereto, the high lift surface (17; 19) being movably arranged with respect to the support structure (32), **in that** the detection device (71) further comprises a sensing target (79) that is movably arranged with respect to the support structure (32) and assumes a pre-defined sensing target end position if the high lift surface (17; 19) has reached the pre-defined end position, in particular the nominal fully retracted state, and **in that** the sensor (73) is adapted to detect when the sensing target (79) reaches and/or leaves the sensing target end position.

4. Arrangement according to claim 3,
**characterized in that** the sensor (73) is configured as a proximity sensor.

5. Arrangement according to claim 1,
**characterized in that** the detection device (71; 71') is adapted to detect a measure for a difference of an actual position of the high lift surface (17; 19) from a pre-defined end position thereof, in particular a pre-defined end position corresponding to a nominal fully retracted state of the high lift surface (17; 19).

6. Arrangement according to claim 5,
**characterized in that** the detection device (71; 71') comprises a sensor (73; 73') mounted on a support structure (32) for the high lift surface (17; 19) or near the support structure (32) and fixed relative thereto, the high lift surface (17; 19) being movably arranged with respect to the support structure (32), **in that** the detection device (71; 71') further comprises a sensing target (79; 79') that is movably arranged with respect to the support structure (32) and assumes a pre-defined sensing target end position if the high lift surface (17; 19) has reached the pre-defined end position, in particular the nominal fully retracted state, and **in that** the sensor (73; 73') is adapted to detect a distance of the sensing target (79; 79') from the sensing target end position.

7. Arrangement according to claim 1,
**characterized in that** the detection device (71') is adapted to detect a value that is capable of being used as a measure for an actual position of the high lift surface (17; 19) with respect to a pre-defined reference position thereof along a substantially entire stroke through which the high lift surface (17; 19) is nominally movable in accordance with pre-defined system kinematics.

8. Arrangement according to claim 7,
**characterized in that** the detection device (71') comprises a position sensor (73') mounted on a support structure (32) for the high lift surface (17; 19) or near the support structure (32) and fixed relative thereto, the high lift surface (17; 19) being movably arranged with respect to the support structure (32), **in that** the detection device (71') further comprises a sensing target (79') that is movably arranged with respect to the support structure (32) and is movable in a manner kinematically linked to the movement of the high lift surface (17; 19) along the substantially entire stroke thereof, and **in that** the position sensor (73') is configured to detect a position of the sensing target (79') with respect to the reference position for the substantially entire stroke.

9. Arrangement according to claim 8,
**characterized in that** the position sensor (73') is a linear position sensor, for example a linear position encoder.

10. Arrangement according to any one of claims 3, 4, 6, 8 or 9,
**characterized in that** the sensing target (79; 79') is mounted on a high lift surface carriage (70) that can be caused to move along a track (34) defined on the support structure (32).

11. Arrangement according to claim 1,
**characterized in that** the detection device (71 ") is configured to detect a value suitable for being used as a measure for a torque transmitted at a mounting interface (89) between an actuator (61), in particular a geared rotary actuator (61), that is provided along the drive load path (P) and a fixed wing structure (97) to which the actuator (61) is attached.

12. Arrangement according to claim 11,
**characterized in that** the detection device (71 ") comprises at least one load sensor (73") configured and arranged to enable measurement of the torque supported by a ring gear (65) of the actuator (61), the ring gear (65) being fixedly coupled to the fixed wing structure (97), for example via a housing of the actuator (61) to which the ring gear (65) is connected.

13. High lift system (13) of an aircraft (1), comprising
a high lift surface (17, 19) arranged to be movable with respect to a wing structure (97) in accordance with pre-defined system kinematics;
a drive arrangement adapted to drive the high lift surface (17, 19) for movement thereof in accordance with the system kinematics and capable of supplying a driving load for the high lift surface (17, 19) along a drive load path (P); and
an arrangement (36; 36'; 36") configured to detect failure of and/or monitor integrity of the drive load path (P) according to any one of the preceding claims.

14. Method of detecting failure and/or monitoring integrity of a drive load path (P) for driving a high lift surface (17; 19) of an aircraft (1), in particular using an arrangement in accordance with any one of claims 1 to 12, the method comprising:
monitoring if an interruption of the drive load path (P) or an at least partial loss of load transmitted along the same is present using a detection device (71; 71'; 71"); and
providing a signal indicating failure of the drive load path (P) and/or a signal indicating integrity of the drive load path (P) depending on a condition, value or measure detected by the detection device (71; 71'; 71").
